# EUROPÄISCHE PATENTANMELDUNG

(11) **EP 0 708 236 A1**
(43) Veröffentlichungstag der Anmeldung: **24.04.1996**
(21) Anmeldenummer: 95107231.3
(22) Anmeldetag: 12.05.1995
(51) Int. Cl.: F02M 25/07, F16L 23/032

(54) **Leitungsverbindung einer Einrichtung zur Abgasrückführung**

(30) Priorität: 12.10.1994 DE 9416421 U
(71) Anmelder: Gustav Wahler GmbH u. Co, D-73730 Esslingen (DE)
(72) Erfinder: Wahler, Hans, D 73728 Esslingen (DE)
(74) Vertreter: Kratzsch, Volkhard, Dipl.-Ing.

(57) **Zusammenfassung**

Die Erfindung bezieht sich auf eine Leitungsverbindung einer Einrichtung zur Abgasrückführung, bei der ein Leitungsabschnitt (16) endseitig mit einem Ende (13) eines Gehäuses (14) verbunden ist. Die Verbindung erfolgt kraftschlüssig und/oder formschlüssig unmittelbar oder mittelbar und ist dicht sowie schwingungs- und temperaturfest. Der Leitungsabschnitt (16) hat einen Stufenabschnitt (22,37), der einen etwa trapez- oder keilförmigen Ringrand (35) am Ende des Gehäuses (14) übergreift und in radialer Richtung mittels eines diesen übergreifenden Spannringes (43) festgespannt wird. Zwischen dem Flansch (22) des Leitungsabschnitts (16) und der zugewandten Stirnfläche (38) des Ringrandes (35) ist mindestens eine in Umfangsrichtung durchlaufende Ringanlage (50) auf einem Flächenbereich vorgesehen. Diese wird z.B. durch einen Ringvorsprung (51) in Form einer Ringsicke am Flansch (22) gebildet, der an der Stirnfläche (38) des Ringrandes (35) anliegt.

## Beschreibung

Die Erfindung bezieht sich auf eine Leitungsverbindung einer Einrichtung zur Abgasrückführung mit den Merkmalen im Oberbegriff des Anspruchs 1.

Bei bekannten Einrichtungen dieser Art besteht die Leitung aus hochwertigem Material, z. B. legiertem und u. U. warmfestem Stahl, der nichtrostend ist, damit die Leitung, die vom heißen und aggressiven Abgas durchströmt ist, den Belastungen standhalten kann. Hinzu kommt, daß die Leitung wegen der heißen Abgase auch temperaturfest sein muß. Der Anschluß des Gehäuses an die Leitung verlangt im Verbindungsbereich eine absolut dichte Verbindung, um den Austritt des Abgases auszuschließen. Außerdem muß die Verbindung temperaturfest und schwingungsfest und natürlich auch mechanisch fest sein. Auch sollen möglichst noch Montagetoleranzen aufgenommen werden können. Das Gehäuse ist häufig aus temperaturfestem Guß hergestellt, z.B. aus Aluminium-Druckguß. Diese Materialien der Leitung und des Gehäuses gestatten in bisher bekannter Weise nur mechanische Verbindungen, insbesondere Schraubverbindungen. Diese sind sehr teuer und ferner montageaufwendig, platzaufwendig und bringen relativ hohe Kosten. Selbst dann ist eine absolute Dichtheit, Schwingungsfestigkeit und Temperaturfestigkeit auf Dauer keineswegs gewährleistet.

Der Erfindung liegt die Aufgabe zugrunde, eine Leitungsverbindung der eingangs genannten Art zu schaffen, bei der der Anschluß des Leitungsabschnittes an das Gehäuse einfacher und kostengünstiger und standfester gestaltet ist und damit die Leitungsverbindung insgesamt kostengünstiger ist, wobei mit einfachen Mitteln allen eingangs genannten Voraussetzungen, insbesondere auch einer dichten Verbindung, entsprochen werden kann.

Die Aufgabe ist bei einer Leitungsverbindung der eingangs genannten Art gemäß der Erfindung durch die Merkmale im Kennzeichnungsteil des Anspruchs 1 gelöst. Vorteilhafte weitere Erfindungsmerkmale und Ausgestaltungen ergeben sich aus den Ansprüchen 2 bis 6. Eine weitere vorteilhafte und wesentliche Gestaltung ergibt sich aus Anspruch 7, wobei weitere vorteilhafte Erfindungsmerkmale und Ausgestaltungen in den Ansprüchen 8 bis 23 enthalten sind. Die erfindungsgemäßge Leitungsverbindung gewährleistet eine Dichtheit, Schwingungsfestigkeit und Temperaturfestigkeit und macht auch noch die Aufnahme von Montagetoleranzen möglich. Ferner ist die Leitungsverbindung einfach und kostengünstig, wobei diese bedarfsweise einfach und schnell herstellbar ist und wenn nötig auch wieder lösbar ist. Durch die Merkmale im Anspruch 7 wird zumindest eine in Umfangsrichtung durchlaufende Ringanlage auf einem in Umfangsrichtung verlaufenden Flächenbereich gewährleistet und damit eine zuverlässige Anlage zwischen dem Leitungsabschnitt und dem Ende des Gehäuses. Dadurch kann eine abgasdichte Verbindung, die das Austreten von Abgasen nahezu ausschließt, erreicht werden. Besonderer zusätzlicher Dichtungsmittel bedarf es dazu nicht, auch nicht anderer zusätzlicher Bauteile. Die Leitungsverbindung mit dadurch gewährleisteter Dichtheit ist somit einfach und kostengünstig. Auch eine Toleranzaufnahme ist möglich.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand von in den Zeichungen gezeigten Ausführungsbeispielen näher erläutert. Es zeigen:
- Fig. 1: einen schematischen axialen Schnitt einer Leitungsverbindung einer Einrichtung zur Abgasrückführung gemäß einem ersten Ausführungsbeispiel,
- Fig. 2: einen schematischen Schnitt entsprechend demjenigen in Fig. 1 gemäß einem zweiten Ausführungsbeispiel.

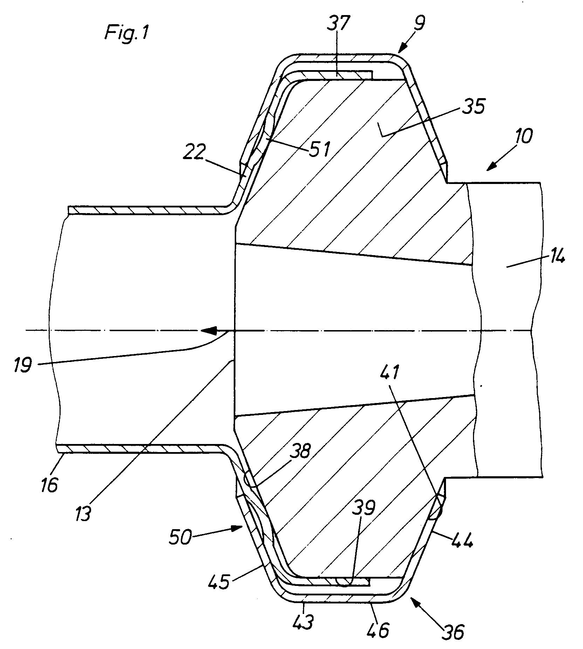

In Fig. 1 ist schematisch eine Leitungsverbindung 9 einer Einrichtung zur Abgasrückführung 10 gezeigt, die in üblicher Weise ein hier nicht dargestelltes Ventil hat, das z. B. von einer Unterdruckdose od. dgl. gesteuert wird, wobei an das im wesentlichen zylindrische Ende 13 eines Gehäuses 14, das nachfolgend als Ventilgehäuse bezeichnet ist, eine Leitung angeschlossen ist, von der in Fig. 1 nur ein Teil eines dazu koaxial verlaufenden Leitungsabschnittes 16 zu sehen ist. Bei mehr oder weniger geöffnetem Ventil gelangt das zurückzuführende Abgas, vom Sammelrohr kommend, in das Ventil, in das Gehäuse 14 und von dort in Pfeilrichtung 19 in den Leitungsabschnitt 16. Das Abgas verläßt die zum Leitungabschnitt 16 gehörende Leitung an nicht sichtbarer Stelle, um der Ansaugluft beigemischt zu werden. Auch eine gegensinnige Strömungsrichtung ist möglich.

In der Regel besteht die Leitung mit dem Leitungsabschnitt 16 aus einem nichtrostenden, legierten Stahl, z. B. aus einem Chrom-Nickel-legierten Stahl. Auch ein hochwarmfester legierter Stahl kann in Betracht kommen. Da die Leitung mitsamt dem Leitungsabschnitt 16 vom heißen und aggressiven Abgas durchströmt ist, ist aus Gründen einer langen Lebensdauer ein derartiges hochwertiges Material notwendig. Dabei muß die Leitung mit dem Leitungsabschnitt 16 temperaturfest, schwingungsfest und vor allem auch dicht mit dem Ventilgehäuse 14 verbunden sein.

Das Gehäuse 14, z.B. Ventilgehäuse, wurde in der Vergangenheit aus einem temperaturfesten Gußmaterial gebildet. Es kann heutzutage z.B. aus Aluminium-Druckguß bestehen. Diese verschiedenen Materialien des Ventilgehäuses 14 einerseits und des Leitungsabschnitts 16 der Leitung andererseits werfen Probleme im Bereich der Verbindungstelle auf, wo der Leitungsabschnitt 16 an das Ende 13 des Ventilgehäuses 14 angeschlossen ist. Die Verbindung muß nicht nur temperaturfest, schwingungsfest und mechanisch fest sein sondern insbesondere auch dicht, um einen Austritt des Abgases im Verbindungsbereich mit Sicherheit auszuschließen.

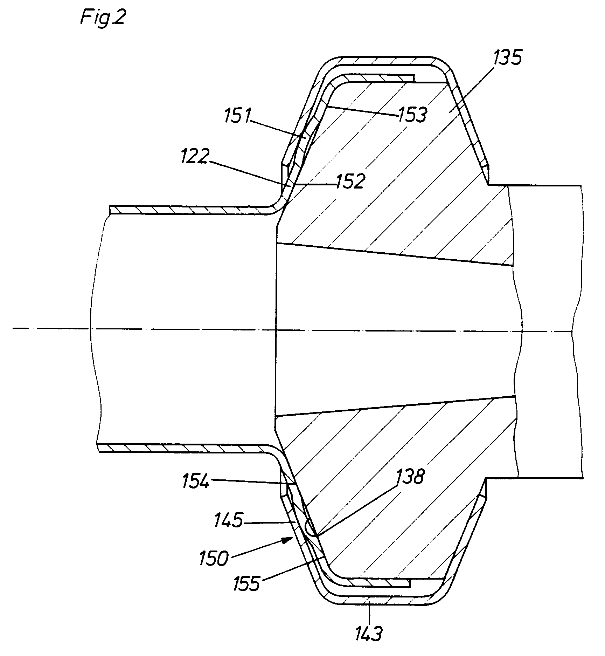

In Fig. 1 und 2 ist nun vorgesehen, daß der Leitungsabschnitt 16 mit seinem Ende kraftschlüssig und/oder formschlüssig unmittelbar oder mittelbar mit dem Ende 13 des Ventilgehäuses 14 schwingungs- und temperaturfest und vor allem auch dicht verbunden ist.

Am Ende 13 des Ventilgehäuses 14 ist ein verdickter Ringrand 35 ausgebildet, der einstückig mit dem übrigen Material des Ventilgehäuses 14 ist. Der Leitungsabschnitt 16 ist bei beiden Ausführungsbeispielen mittels einer Spannringverbindung 36 am Ringrand 35 befestigt. Der Leitungsabschnitt 16 weist am Ende einen Stufenabschnitt auf, der aus einem Flansch 22 und einem Randteil 37 gebildet ist, der sich außen an den Flansch 22 anschließt und wie dieser einstückiger Bestandteil des Leitungsabschnittes 16 ist. Der Randteil 37 übergreift den Ringrand 35 auf deren äußerer Umfangsfläche 39, an der er anliegt oder anlegbar ist. Der Randteil 37 verläuft etwa koaxial zum Leitungsabschnitt 16. Der somit aus dem Flansch 22 und dem Randteil 37 gebildete Stufenabschnitt am Ende des Leitungsabschnitts 16 ist so gestaltet, daß er zumindest mit Flächenbereichen am Ringrand 35 an dessen einer Stirnfläche 38 und/oder an dessen äußerer Umfangsfläche 39 anliegt oder anlegbar ist.

Wie ersichtlich ist, ist der Ringrand 35 des Ventilgehäuses 14 im Querschnitt etwa trapezförmig oder keilförmig ausgebildet. Der Stufenabschnitt, gebildet aus dem Flansch 22 und dem Randteil 37, ist außen von einem Spannring 43 umfaßt oder umfaßbar, der im Querschnitt etwa trapezförmig oder keilförmig ausgebildet und somit an den Querschnitt des Ringrandes 35 angepaßt ist. Der Spannring 43 liegt mit einer Flanke 44 an einer Ringfläche 41 des Ringrandes 35 an, die auf der der Stirnfläche 38 in Axialrichtung abgewandten Seite des Ringrandes 35 verläuft. Die andere Flanke 45 des Spannringes 43 übergreift den Flansch 22 des Leitungsabschnitts 16. Der Spannring 43 ist in Radialrichtung zusammenspannbar. Bei diesem radialen Festspannen preßt der Spannring 43 mit der Flanke 45 den Flansch 22 an die zugeordnete Stirnfläche 38 des Ringrandes 35 an.

Der Spannring 43 kann mit einem Umfangsabschnitt 46, der sich zwischen beiden Flanken 44 und 45 erstreckt, radial von außen her am Randteil 37 des Leitungsabschnitts 16 anliegen. Statt dessen kann der Umfangsabschnitt 46 im festgespannten Zustand auch noch in Radialrichtung in Abstand davon verlaufen, wie gezeigt ist.

Der Spannring 43 ist in besonderer Weise als V-Bandschelle ausgebildet und mit Vorzug zumindest an einer Umfangsstelle getilt und im Teilungsbereich zusammenfügbar. Hierbei ist der Spanring 43 im Teilungsbereich über Spannmittel, z. B. mindestens eine Spannschraube, zusammenschraubbar. Auf diese Weise ist die Leitungsverbindung 9 durch entsprechende Handhabung des Spannringes 43 nach Belieben herstellbar und auch wieder lösbar. Dabei ist der Benutzer in der Lage, selbst das angelieferte Ventil einerseits und die angelieferte Leitung mit dem endseitigen Leitungsabschnitt 16 andererseits mittels des Spannringes 43 in beschriebener Weise miteinander zu verbinden. Die Verbindung ist schnell und einfach herstellbar. Sie hat vor allem den Vorteil, daß die Verbindung temperaturfest, schwingungsfest, mechanisch fest und vor allem dicht ist, so daß das Austreten von Abgas ausgeschlossen ist.

Der am Ende des Leitungsabschnitt 16 vorgesehene Flansch 22 ist radial nach außen gerichtet. Beim gezeigten Ausführungsbeispiel verläuft der Flansch 22 außerdem mit Vorzug noch schräg. Dem Flansch 22 ist die diesem zugewandte und dazu etwa parallel ausgerichtete Stirnfläche 38 des Ringrandes 35 zugeordnet. Auch diese Stirnfläche 38 verläuft somit mit Vorzug entsprechend schräg.

Zwischen dem Flansch 22 des Leitungsabschnitts 16 und der Stirnfläche 38 des Ringrandes 35 ist mindestens eine in Umfangsrichtung durchlaufende Ringanlage 50 auf einem Flächenbereich vorgesehen. Diese mindestens eine Ringanlage 50 ist beim ersten Ausführungsbeispiel in Fig. 1 durch einen Ringvorsprung 51 am Flansch 22, der über die Flanschfläche in Richtung zur Stirnfläche 38 hin vorsteht und an die Stirnfläche 38 angepreßt oder anpreßbar ist, gebildet. Dieser Ringvorsprung 51 besteht mit Vorzug aus einer aus dem Flansch 22 herausgedrückten Ringsicke. Der Flansch 22, insbesondere dessen Ringvorsprung 51, z. B. dessen Ringsicke, ist zumindest in Grenzen federnd. Die Flanke 45 des Spannringes 43 übergreift den Flansch 22 soweit, daß auch dieser Bereich des Ringvorsprunges 51, insbesondere der Ringsicke, davon übergriffen ist.

Beim Zusammenbau wird der Leitungsabschnitt 16 im Bereich des Flansches 22 mit dem Ringvorsprung 51 an die zugewandte Stirnfläche 38 angelegt, wobei nur der Bereich des Ringvorsprunges 51 ringsum in Umfangsrichtung Kontakt mit einem entsprechenden Flächenbereich auf der Stirnfläche 38 hat. Erfolgt das Festspannen mittels des Spannringes 43 in beschriebener Weise, so wird unter Ausnutzung des federnden Verhaltens des Flansches 22, zumindest im Bereich des Ringvosprunges 51, der Ringvorsprung 51 über die Flanke 45 des Spannringes 43 an die Stirnfläche 38 des Ringrandes 35 angepreßt. Es ergibt sich im Bereich des Ringvorsprunges 51 in Umfangsrichtung eine durchgehende Linienberührung, die auf jeden Fall eine dichte Verbindung im Bereich der Ringanlage 50 gewährleistet. Dadurch, daß der Leitungsabschnitt 16 mit seinem Randteil 37 die äußere Umfangsfläche 39 übergreift und an dieser anliegt und dadurch eine Zentrierung erreicht ist, ist eine mechanisch feste, temperaturfeste und schwingungsfeste Verbindung sichergestellt.

Bei einem anderen, nicht gezeigten Ausführungsbeispiel ist die mindestens eine Ringanlage 50 durch einen Ringvorsprung an der Stirnfläche 38 des Ringrandes 35 gebildet, an den der dann z. B. durchgehend flächige Flansch 22 angepreßt oder anpreßbar ist.

Bei einem anderen, nicht gezeigten Ausführungsbeispiel ist sowohl auf der Stirnfläche 38 des Ringrandes 35 als auch entsprechend Fig. 1 am Flansch 22 jeweils ein Ringvorsprung vorgesehen.

Bei dem in Fig. 2 gezeigten Ausführungsbeispiel sind für die Teile, die dem ersten Ausführungsbeispiel entsprechen, um 100 größere Bezugszeichen verwendet, so daß dadurch auf die Beschreibung des ersten Ausführungsbeispieles Bezug genommen ist.

Das zweite Ausführungsbeispiel in Fig. 2 unterscheidet sich vom ersten Ausführungsbeispiel dadurch, daß die mindestens eine Ringanlage 150 durch einen Ringflächenbereich 152 und/oder 153 des Flansches 122 und einen jeweils zugeordneten Ringflächenbereich 154 bzw. 155 der Stirnfläche 138 des Ringrandes 135 gebildet ist, an die der Flansch 122 mit seinem Ringflächenbereich 152 bzw. 153 angepreßt oder anpreßbar ist. Der Flansch 122 weist mindestens einen Ringvorsprung 151 auf, der über die Flanschfläche in der Richtung übersteht, die der Stirnfläche 138 des Ringflansches 135 abgewandt ist, also in entgegengesetzter Richtung wie beim ersten Ausführungsbeispiel in Fig. 1 weist. Dieser Ringvorsprung 151 des Flansches 122 trennt somit zwei jeweils daran angrenzende Ringflächenbereiche 152, 153 voneinander, die an jeweils einen zugeordneten Ringflächenbereich 154 bzw. 155 der Stirnfläche 138 des Ringrandes 135 angepreßt oder anpreßbar sind.

Auch bei diesem zweiten Ausführungsbeispiel wird das zumindest in Grenzen federnde Verhalten des Flansches 122 ausgenutzt. Wird der Spannring 143 aufgebracht, so übergreift dessen Flanke 145 den in dieser Richtung vorspringenden mindestens einen Ringvorsprung 151, wobei ansonsten keine Berührung zwischen der Flanke 145 und dem Flansch 122 stattfindet. Wird der Spannring 43 festgespannt, so drückt dessen eine Flanke 145 auf den Ringvorsprung 151. Dies hat zur Folge, daß beim Flansch 122 dessen beide dem Ringvorsprung 151 benachbarte Ringflächenbereiche 152, 153 an die zugeordneten Ringflächenbereiche 154 bzw. 155 der Stirnseite 138 des Ringrandes 135 angepreßt werden, so daß im Bereich dieser Ringflächenbereiche 152 bis 155 eine ringsum laufende flächige Berührung und somit eine dichte Anlage erreicht wird, die eine zuverlässige Abdichtung gegen etwaiges Austreten des Abgases gewährleistet.

Beim ersten Ausführungsbeispiel in Fig. 1 und auch beim zweiten Ausführungsbeispiel in Fig. 2 wird im übrigen aufgrund der besonderen Gestaltung des Flansches 22 bzw. 122 auch noch eine Labyrinthdichtung zwischen dem Flansch 22, 122 und der zugeordneten Stirnfläche 38 bzw. 138 erreicht, wodurch die Dichtwirkung noch gesteigert wird. Die erreichte dichte Verbindung wird ersichtlich auf kostengünstige und einfache Weise erzielt, ohne daß es zusätzlicher Dichtungselemente oder sonstiger zusätzlicher Teile bedarf.

## Patentansprüche

1. Leitungsverbindung einer Einrichtung zur Abgasrückführung, bei der ein Leitungsabschnitt (16) endseitig mit einem Ende (13) eines Gehäuses (14), z.B. Ventilgehäuses, verbunden ist,
**dadurch gekennzeichnet**,
daß der Leitungsabschnitt (16) mit seinem Ende kraftschlüssig und/oder formschlüssig unmittelbar oder mittelbar mit dem Ende (13) des Gehäuses (14) dicht sowie schwingungs- und temperaturfest verbunden ist.

2. Leitungsverbindung nach Anspruch 1,
**dadurch gekennzeichnet**,
daß am Ende (13) des Gehäuses (14) ein verdickter Ringrand (35) ausgebildet ist und daß der Leitungsabschnitt (16) mittels einer Spannringverbindung (36) am Ringrand (35) befestigt ist.

3. Leitungsverbindung nach Anspruch 1 oder 2,
**dadurch gekennzeichnet**,
daß der Leitungsabschnitt (16) am Ende einen Stufenabschnitt (22, 37) aufweist, der zumindest mit Flächenbereichen am Ringrand (35) an dessen Stirnfläche (38) und/oder an dessen äußerer Umfangsfläche (39) anliegt oder anlegbar ist.

4. Leitungsverbindung nach einem der Ansprüche 1 bis 3,
**dadurch gekennzeichnet**,
daß der Ringrand (35) des Gehäuses (14) im Querschnitt etwa trapezförmig oder keilförmig ausgebildet ist.

5. Leitungsverbindung nach einem der Ansprüche 1 bis 4,
**dadurch gekennzeichnet**,
daß der Stufenabschnitt (22, 37) des Leitungsabschnitts (16) außen von einem Spannring(43) umfaßt oder umfaßbar ist, der im Querschnitt etwa trapezförmig oder keilförmig ausgebildet ist.

6. Leitungsverbindung nach einem der Ansprüche 1 bis 5,
**dadurch gekennzeichnet**,
daß der Leitungsabschnitt (16) einen radial nach außen gerichteten und dabei vorzugsweise schräg verlaufenden Flansch (22) aufweist, der einer zugewandten und dazu etwa parallel ausgerichteten Stirnfläche (38) des Ringrandes (35) zugeordnet ist.

7. Leitungsverbindung nach einem der Ansprüche 1 bis 6,
**dadurch gekennzeichnet**,
daß zwischen dem Flansch (22; 122) des Leitungsabschnitts (16) und der Stirnfläche (38; 138) des Ringrandes (35; 135) mindestens eine in Umfangsrichtung durchlaufende Ringanlage (50; 150) auf einem Flächenbereich vorgesehen ist.

8. Leitungsverbindung nach Anspruch 7,
**dadurch gekennzeichnet**,
daß die mindestens eine Ringanlage (50) durch einen Ringvorsprung (51) am Flansch (22), der über die Flanschfläche in Richtung zur Stirnfläche (38) hin vorsteht und an die Stirnfläche (38) angepreßt oder anpreßbar ist, gebildet ist.

9. Leitungsverbindung nach Anspruch 8,
**dadurch gekennzeichnet**,
daß der Ringvorsprung (51) aus einer aus dem Flansch (22) herausgedrückten Ringsicke gebildet ist.

10. Leitungsverbindung nach Anspruch 7,
**dadurch gekennzeichnet**,
daß die mindestens eine Ringanlage durch einen Ringvorsprung an der Stirnfläche (38) des Ringrandes (35) gebildet ist, an den der Flansch (22) angepreßt oder anpreßbar ist.

11. Leitungsverbindung nach Anspruch 7,
**dadurch gekennzeichnet**,
daß die mindestens eine Ringanlage (150) durch einen Ringflächenbereich (152, 153) des Flansches (122) und einen zugeordneten Ringflächenbereich (154, 155) der Stirnfläche (138) des Ringrandes (135) gebildet ist, an die der Flansch (122) mit seinen Ringflächenbereichen (152, 153) angepreßt oder anpreßbar ist.

12. Leitungsverbindung nach einem der Ansprüche 1 bis 11,
**dadurch gekennzeichnet**,
daß der Flansch (122) mindestens einen Ringvorsprung (151) aufweist, der über die Flanschfläche in der Richtung übersteht, die der Stirnfläche (138) des Ringrandes (135) abgewandt ist.

13. Leitungsverbindung nach Anspruch 11 und 12,
**dadurch gekennzeichnet**,
daß der Ringvorsprung (151) des Flansches (122) zwei jeweils daran angrenzende Ringflächenbereiche (152, 153) voneinander trennt, die an jeweils einen zugeordneten Ringflächenbereich (154, 155) der Stirnfläche (138) des Ringrandes (135) angepreßt oder anpreßbar sind.

14. Leitungsverbindung nach einem der Ansprüche 1 bis 13,
**dadurch gekennzeichnet**,
daß der Flansch (22; 122), insbesondere dessen Ringvorsprung (51; 151), z. B. dessen Ringsicke, zumindest in Grenzen federnd ist.

15. Leitungsverbindung nach einem der Ansprüche 1 bis 14,
**dadurch gekennzeichnet**,
daß sich an den Flansch (22) außen ein Randteil (37) anschließt, der den Ringrand (35) auf dessen äußerer Umfangs fläche (39) übergreift und vorzugsweise daran anliegt oder daran anlegbar ist.

16. Leitungsverbindung nach Anspruch 15,
**dadurch gekennzeichnet**,
daß der Randteil (37) etwa koaxial zum Leitungsabschnitt (16) ausgerichtet ist.

17. Leitungsverbindung nach einem der Ansprüche 1 bis 16,
**dadurch gekennzeichnet**,
daß der Stufenabschnitt (22, 37) des Leitungsabschnitts (16) als damit einstückiger Teil ausgebildet ist und vom Flansch (22) und ggf. dem daran anschließenden Randteil (37) gebildet ist.

18. Leitungsverbindung nach einem der Ansprüche 1 bis 17,
**dadurch gekennzeichnet**,
daß der Spannring (43) mit einer Flanke (45) den Flansch (22) des Leitungsabschnitts (16) übergreift und beim radialen Festspannen mit dieser Flanke (45) den Flansch (22) an die zugeordnete Stirnfläche (38) des Ringrandes (35) anpreßt.

19. Leitungsverbindung nach einem der Ansprüche 1 bis 18,
**dadurch gekennzeichnet**,
daß der Spannring (43) mit einer zweiten Flanke (44) an einer Ringfläche (41) des Ringrandes (35) anliegt, die auf der der Stirnfläche (38) in Axialrichtung abgewandten Seite des Ringrandes (35) verläuft.

20. Leitungsverbindung nach einem der Ansprüche 1 bis 19,
**dadurch gekennzeichnet**,
daß der Spannring (43) mit einem Umfangsabschnitt (46), der sich axial zwischen beiden Flanken (44, 54) erstreckt, radial von außen her an dem Randteil (37) des Leitungsabschnitts (16) anliegt oder in Abstand davon verläuft.

21. Leitungsverbindung nach einem der Ansprüche 1 bis 20,
**dadurch gekennzeichnet**,
daß der Spannring (43) als V-Bandschelle ausgebildet ist.

22. Leitungsverbindung nach einem der Ansprüche 1 bis 21,
**dadurch gekennzeichnet**,
daß der Spannring (43) zumindest an einer Umfangsstelle geteilt ist und im Teilungsbereich zusammenfügbar ist.

23. Leitungsverbindung nach Anspruch 22,
**dadurch gekennzeichnet**,
daß der Spannring (43) im Teilungsbereich mittels Spannmitteln, z. B. mindestens einer Spannschraube, zusammenspannbar ist.
